# EUROPEAN PATENT APPLICATION

(11) **EP 1 925 789 A1**
(43) Date of publication of application: **28.05.2008**
(21) Application number: 06810414.0
(22) Date of filing: 15.09.2006
(51) Int. Cl.: F01N 3/02, B01D 53/86, B01D 53/94, F01N 3/08, F01N 3/24

(54) **EXHAUST GAS CLEAN-UP SYSTEM FOR INTERNAL COMBUSTION ENGINE**

(30) Priority: 16.09.2005 JP 2005270888
(71) Applicant: TOYOTA JIDOSHA KABUSHIKI KAISHA, Toyota-shi Aichi 471-8571 (JP)
(72) Inventor: HIRATA, Hirohito, Toyota-shi, Aichi 471-8571 (JP); KAKINOHANA, Masaru, Toyota-shi, Aichi 471-8571 (JP); IBE, Masaya, Toyota-shi, Aichi 471-8571 (JP); SAKAKIBARA, Yuji, Aichi-gun, Aichi 480-1192 (JP); ITOH, Yoshihiko, Aichi-gun, Aichi 480-1192 (JP)
(74) Representative: Smith, Samuel Leonard
(86) International application number: PCT/JP2006/318801
(87) International publication number: WO 2007/032564

(57) **Abstract**

A device for cleaning exhaust gas of an internal combustion engine according to the present invention includes a device (30) for collecting particulate matter from exhaust gas in an exhaust gas passage (15), ozone feeding device (40) capable of feeding ozone to the device (30) for collecting particulate matter from upstream thereof, and an NOx catalyst (20) disposed upstream from the ozone feeding device (40), for cleaning NOx in the exhaust gas. Since NOx is preliminarily removed by the NOx catalyst (20) at a position upstream from the ozone feeding device (40), the consumption of ozone due to the reaction with NOx is prevented, whereby it is possible to effectively use ozone for the purpose of oxidizing and removing PM in the device (30) for collecting particulate matter.

## Description

### TECHNICAL FIELD

The present invention relates to a device for cleaning exhaust gas of an internal combustion engine, particularly to a device for cleaning exhaust gas exhausted from a diesel engine by collecting and oxidizing particulate matter in the exhaust gas.

### BACKGROUND ART

Generally, it has been known that in exhaust gas exhausted from a diesel engine, particulate matter (referred to as PM hereinafter) mainly composed of carbon is contained and causes the atmospheric contamination. Accordingly, many devices and/or methods have been proposed for collecting such particulate matter and removing the same from the exhaust gas.

For example, there are proposals in that a temperature of a diesel particulate filter (DPF) is made to rise by forcibly injecting fuel so that the collected PM is oxidized and burnt, or that NO₂ is generated from NO in the exhaust gas so that PM is oxidized by NO₂ (see, for example, Japanese Patent Laid-Open No. 2002-531762), or that PM is oxidized by using catalyzed DPF (see, for example, Japanese Patent Laid-Open Nos. 6-272541 and 9-125931). However, there are problems in such proposals that if the fuel is forcibly injected, the fuel consumption becomes worse and DPF may be broken due to the rapid temperature rise of PM, that since the oxidation rate of PM caused by NO₂ is insufficient in the proposal described in Japanese Patent Laid-Open No. 2002-531762, it is difficult to completely oxidize PM exhausted from the engine and remove the same, and that since both the catalyst and PM are solid in the proposal described in Japanese Patent Laid-Open Nos. 6-272541 and 9-125931, the both are not into desirably contact with each other to result in the insufficient oxidation reaction.

Accordingly, a technology has recently be disclosed (for example, in Japanese Patent Laid-Open No. 2005-502823) in that ozone O₃ having a larger oxidation capacity than NO₂ is used for oxidizing PM. In a method and a device for the post treatment of exhaust gas from the diesel engine described in Japanese Patent Laid-Open No. 2005-502823, a device for generating ozone O₃ or nitrogen dioxide NO₂ as oxidizing agent from the exhaust gas by plasma is provided upstream from the particulate filter, and in accordance with the temperature of the exhaust gas, ozone is selectively used if the temperature is low and nitrogen dioxide is selectively used if the temperature is high so that soot collected by the particulate filter is oxidized and removed.

In this regard, in the method and the device for the post treatment of the exhaust gas from the diesel engine disclosed in Japanese Patent Laid-Open No. 2005-502823, the capacity for oxidizing and removing PM is highly evaluated since ozone O₃ having a larger oxidation capacity than that of NO₂ is used. However, in the technology disclosed in Japanese Patent Laid-Open No. 2005-502823, ozone is generated from oxygen that is one of components of the exhaust gas by using plasma and introduced into the particulate filter together with the exhaust gas containing NOₓ or others whereby an amount of ozone thus generated is insufficient. Also, there is a risk in that the ozone having a large oxidation capacity may react with NOx or others in the exhaust gas and is consumed prior to being introduced into the particulate filter, resulting in the reduction of the amount of ozone usable for oxidizing and removing PM, which is problematic since the cleaning efficiency becomes lower and the oxidation rate of PM decreases.

### DISCLOSURE OF THE INVENTION

An object of the present invention is to provide a device for cleaning exhaust gas of an internal combustion engine wherein ozone is effectively usable when PM is oxidized and removed by using ozone.

To achieve the above-mentioned object, the device for cleaning exhaust gas of an internal combustion engine according to the present invention comprises a device for collecting particulate matter from exhaust gas in an exhaust gas passage, ozone feeding means capable of feeding ozone to said device for collecting particulate matter from upstream thereof, and a NOx catalyst disposed upstream from said ozone feeding means, for cleaning NOx in the exhaust gas.

According to this inventive device for cleaning exhaust gas of an internal combustion engine, since the NOx catalyst is disposed upstream from the ozone feeding means, it is possible to preliminarily remove NOx in the exhaust gas by the NOx catalyst at a position upstream from the ozone feeding means. Thereby, NOx is not substantially contained in the exhaust gas at an ozone-feeding position, whereby ozone is prevented from being consumed by NOx in the exhaust gas, and thus a larger amount of ozone is usable for oxidizing and removing PM in the device for collecting particulate matter. As a result, it is possible to effectively use ozone and to improve the PM cleaning efficiency by ozone.

Preferably, the inventive device further comprises a separate ozone feeding means capable of feeding ozone to said NOx catalyst from upstream thereof.

The NOx catalyst does not effectively operate when the temperature of exhaust gas or a catalyst floor is low. Accordingly, in such a case, NOx is not completely cleaned by the NOx catalyst but discharged therefrom in the downstream direction, whereby the discharged NOx reacts with ozone fed from the ozone feeding means and consumes the latter. According to this preferable aspect, since ozone is fed to the NOx catalyst from the separate ozone feeding means, the cleaning of NOx by the NOx catalyst is facilitated. Accordingly, even if the temperature is as low as the NOx catalyst does not effectively function, NOx is prevented from being discharged from the NOx catalyst, and ozone is not uselessly consumed but effectively used for removing PM.

Preferably, the inventive device further comprises means for detecting the temperature of exhaust gas flowing into said NOx catalyst or that of a floor of the NOx catalyst, and means for executing the feeding of ozone from the separate ozone feeding means if the detected temperature of the exhaust gas or that of the floor of said NOx catalyst is lower than a predetermined value.

Thereby, it is possible to feed ozone to the NOx catalyst only when the temperature is as low as the NOx catalyst does not effectively operate, whereby ozone is effectively usable.

Or, the inventive device further comprises means disposed at a position upstream from said NOx catalyst or between said NOx catalyst and said ozone feeding means, for detecting the concentration of NOx in the exhaust gas, and means for controlling an amount of ozone fed from said separate ozone feeding means in accordance with the detected concentration of NOx.

According to this aspect, it is possible to determine whether NOx is cleaned or not in the NOx catalyst and the degree of the cleaning thereof based on the detected NOx concentration, and to effectively use ozone by controlling a feeding amount of ozone in accordance with the detected NOx concentration.

Preferably, the inventive device further comprises an oxidation catalyst for oxidizing unburned component in the exhaust gas, disposed between said NOx catalyst and said ozone feeding means.

When the unburned component (HC, CO or others) are discharged from the NOx catalyst, the unburned component reacts with ozone fed from the ozone feeding means and uselessly consume the latter. According to this preferable aspect, it is possible to oxidize and clean the unburned component discharged from the NOx catalyst by the oxidation catalyst. Thereby, the consumption of ozone due to the reaction with the unburned component is avoided, and ozone is effectively usable.

Or, preferably, the inventive device further comprises an oxidation catalyst disposed at a position upstream from said NOx catalyst, for oxidizing unburned component in the exhaust gas. Thereby, the unburned component is cleaned at a position upstream from the ozone feeding means, and the reaction of ozone with the unburned component is avoidable.

Preferably, the NOx catalyst is of a storage reduction type or a selective catalytic reduction type.

Also, preferably, the inventive device further comprises means for generating ozone from gas outside said exhaust gas passage, wherein said ozone feeding means supplies ozone generated in said ozone generating means to said exhaust gas passage.

For example, if a plasma system using a high voltage as the ozone generating means is employed, the ozone generating efficiency is higher when a high temperature raw material gas is used rather than when a low temperature raw material gas is used. According to this preferable aspect, since ozone is generated by using gas outside the exhaust gas passage, it is possible to improve the ozone generating efficiency in comparison with a case wherein ozone is generated from a high temperature exhaust gas as described in Japanese Patent Laid-Open No. 2005-502823.

According to the present invention, an excellent effect is exhibited wherein ozone is effectively usable when PM is oxidized and cleaned by using ozone.

### BRIEF DESCRIPTION OF THE DRAWINGS

Fig. 1 diagrammatically illustrates a system of a device for cleaning exhaust gas of an internal combustion engine according to a first embodiment of the present invention;

Fig. 2 is a sectional view illustrating a wall flow type honeycomb structure of DPF;

Figs. 3A and 3B are diagrammatic illustrations, respectively, for describing a mechanism for absorbing and releasing NOx in a storage reduction type NOx catalyst;

Fig. 4 is a diagrammatic illustration of a selective catalytic reduction type NOx catalyst;

Fig. 5 is a graph showing a temperature window of the selective catalytic reduction type NOx catalyst;

Fig. 6 illustrates an overall structure of a system for carrying out tests in relation to the first embodiment of the present invention;

Fig. 7 illustrates a detail of a region VII in Fig. 6;

Fig. 8 is a graph showing test results when the storage reduction type NOx catalyst was used;

Fig. 9 is a graph showing test results when the selective catalytic reduction type NOx catalyst was used;

Fig. 10 diagrammatically illustrates a system of a device for cleaning exhaust gas of an internal combustion engine according to a second embodiment of the present invention;

Fig. 11 illustrates an overall structure of a system for carrying out tests in relation to the second embodiment of the present invention;

Fig. 12 illustrates a detail of a region XII in Fig. 11;

Fig. 13 is a graph showing test results when the storage reduction type NOₓ catalyst was used;

Fig. 14 is a graph showing test results when the selective catalytic reduction type NOₓ catalyst was used;

Fig. 15 diagrammatically illustrates a system of a device for cleaning exhaust gas of an internal combustion engine according to a third embodiment of the present invention;

Fig. 16 illustrates part of a system of a device for carrying out tests in relation to the third embodiment of the present invention, corresponding to the detail of the region VII in Fig. 6;

Fig. 17 illustrates part of a system of a device for carrying out tests in relation to the third embodiment of the present invention, corresponding to the detail of the region VII in Fig. 6; and

Fig. 18 is a graph showing test results when the selective catalytic reduction type NOx catalyst was used.

### BEST MODE FOR CARRYING OUT THE INVENTION

Preferred embodiments of the present invention will be described below with reference to the attached drawings.

### (First Embodiment)

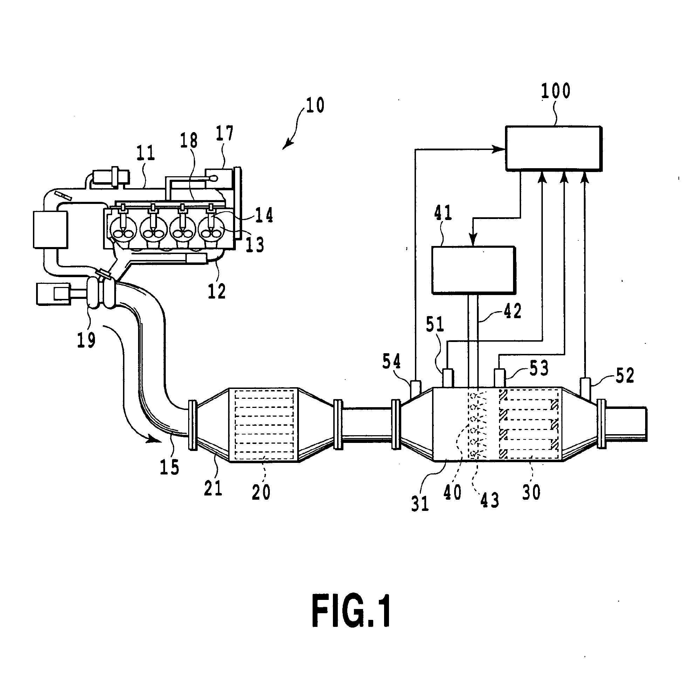

Fig. 1 diagrammatically illustrates a system of a device for cleaning exhaust gas of an internal combustion engine according to a first embodiment of the present invention, wherein reference numeral 10 denotes a compression ignition type internal combustion engine; i.e., a diesel engine, 11 denotes an intake manifold communicated with an intake port, 12 denotes an exhaust manifold communicated with an exhaust port, and 13 denotes a combustion chamber. According to this embodiment, fuel supplied from a fuel tank not shown to a high pressure pump 17 is sent thereby to a common rail 18 and stored there under a high pressure. The highly pressed fuel in the common rail 18 is directly injected from a fuel injection valve 14 to the combustion chamber 13. Exhaust gas from the diesel engine 10 flows via the exhaust manifold 12 and a turbocharger 19 and reaches an exhaust gas passage 15 provided downstream thereof, wherein the exhaust gas is cleaned and discharged to an outer air. In this regard, types of the diesel engine should not be limited to those having such a common rail type fuel injection device, but any other exhaust gas cleaning devices such as an EGR device may be optionally included.

In the exhaust gas passage 15, the NOx catalyst 20 for cleaning NOx in the exhaust gas and a diesel particulate filter (hereinafter referred to as DPF) 30 are arranged in series sequentially from the upstream side. Between the NOx catalyst 20 and DPF 30; in other words, on the downstream side of the NOx catalyst 20 and the on the upstream side of DPF 30, ozone feeding nozzles 40 capable of feeding ozone (O₃) to DPF 30 is disposed. An ozone generator 41 is coupled to the ozone feeding nozzle 40 so that the ozone generated by the ozone generator 41 is supplied to the ozone feeding nozzle 40 via an ozone feeding passage 42 and injected from the ozone feeding nozzles 40 into the exhaust gas passage 15 toward DPF 30 disposed on the downstream side.

DPF 30 is supported within a metallic case 31 of a generally cylindrical shape having truncated conical opposite ends via a supporting member not shown. The supporting member is insulative, heat-durable and shock-absorbable, and made, for example, of alumina mat.

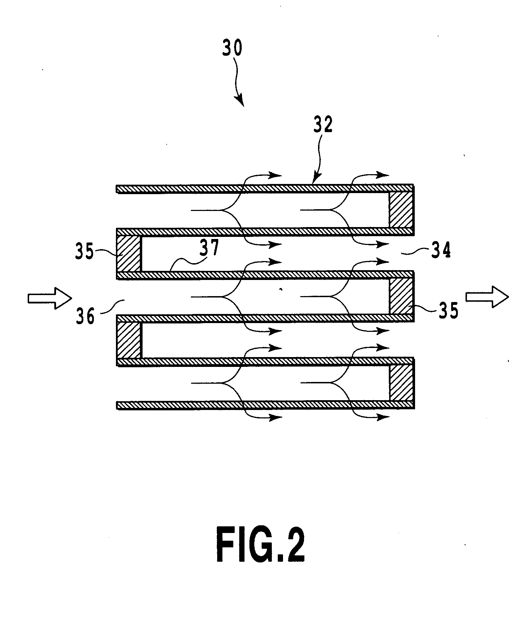

As shown in Fig. 2, DPF 30 is a so-called wall-fall type provided with a honeycomb structure 32 made of porous ceramics wherein the honeycomb structure 32 is formed of ceramic material such as cordierite, silica or alumina. The exhaust gas flows from a left side to a right side as shown by an arrow in the drawing. In the honeycomb structure 32, a first passage 34 having a closing plug 33 at the upstream end and a second passage 36 having a closing plug 35 at the downstream end are alternately arranged to form a honeycomb shape. These passages 34 and 36 are called as a cell, respectively, and disposed parallel to the flowing direction of the exhaust gas. When the exhaust gas flows from the left side to the right side in the drawing, the exhaust gas flows from the second passage 36 into the first passage 34 through a flow passage wall 37 formed of porous ceramics, and flows downstream. At that time, PM in the exhaust gas is collected by the porous ceramics and prevented from being discharged to an outer air. A filter wherein PM is filtrated and collected when the exhaust gas passes the flow passage wall as described above is called as a wall-flow type.

The ozone generator 41 may be of any types including one wherein zone is generated while air or oxygen is fed as a raw material into a discharge tube capable of applying high voltage. Here, air or oxygen used as the raw material is different from that disclosed in Japanese Patent Laid-Open No. 2005-502823, but a gas taken from other areas than the exhaust gas passage 15, such as that contained in outer air. In the ozone generator 41, the efficiency for generating ozone is higher in a case wherein high-temperature gas is used as raw material than in a case wherein low-temperature gas is used. Accordingly, by generating ozone with gas existing other than in the exhaust gas passage, it is possible to improve the efficiency for generating ozone in comparison with the case disclosed in Japanese Patent Laid-Open No. 2005-502823.

While the ozone feeding nozzle 40 will be described later in more detail, it is disposed directly upstream from DPF 30 so that the ozone is fed therefrom to DPF 30 not to be uselessly consumed by the reaction thereof with NOx or components remaining unburned in the exhaust gas (such as CO or HC). Also, to allow the ozone to be evenly fed to all over the upstream end surface of DPF 30, a plurality of ozone feeding ports 43 are arranged to cover a total diameter of the upstream end surface of DPF 30. The ozone feeding nozzle 40 extends in the diametrical direction of the casing 31 and fixed thereto. In this regard, various configurations are possible other than the ozone feeding nozzle 40 described above. For example, if only one ozone feeding port is provided, a distance between the ozone feeding port to the upstream end surface of DPF is preferably prolonged so that the ozone is evenly fed all over the upstream end surface.

The NOx catalyst 20 is supported within a generally cylindrical metallic casing 21 having truncated conical opposite ends via a supporting member not shown in the same manner as DPF 30. The supporting member is insulative, heat-durable and shock-absorbable, and made, for example, of alumina mat.

The NOx catalyst 20 is preferably either a storage reduction type NOx catalyst (NSR) or a selective catalytic reduction type NOx catalyst (SCR).

In a case of the storage reduction type NOx catalyst, the NOx catalyst 20 is structured by carrying, on a surface of a substrate made of oxide such as alumina Al₂O₃, precious metal such as platinum Pt as a catalytic component, and an NOx absorbent component. The NOx absorbent component is at least one selected from a group consisting of alkali metal such as potassium K, sodium Na, lithium Li or cesium Cs, alkaline earth such as barium Ba or calcium Ca, and rare earth such as lanthanum La or yttrium.

The storage reduction type NOx catalyst 20 operates to absorb NOx when an air-fuel ratio of the exhaust gas incoming into the catalyst is leaner than a predetermined value (typically a theoretical air-fuel ratio) and release NOₓ when the concentration of oxygen in the exhaust gas is lowered. In this embodiment, since the diesel engine is used, the air-fuel ratio of the exhaust gas is lean in the usual state, whereby the NOx catalyst 20 absorbs NOx contained in the exhaust gas. Alternatively, if reducing agent is fed on the upstream side of NOx catalyst 20 to make the air-fuel ratio of the exhaust gas incoming into the catalyst to be rich, the NOx catalyst 20 releases the absorbed NOx. The NOx thus released is reduced and cleaned by the reaction with the reducing agent.

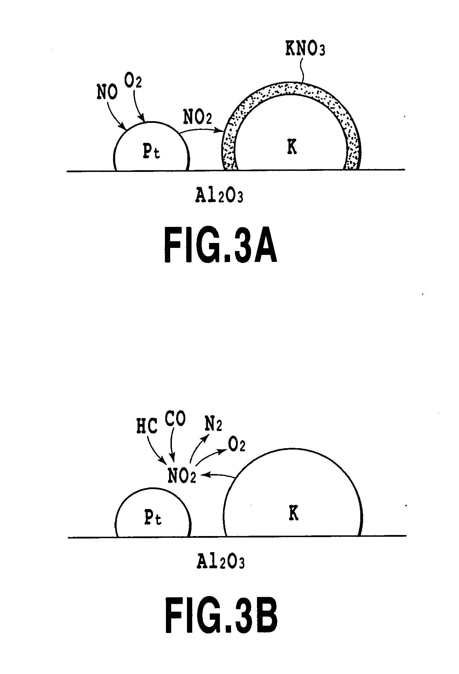

It is thought that the absorption/release and the reduction/cleaning of NOx is carried out based on a mechanism described below with reference to Figs. 3A and 3B. This mechanism will be described in an example wherein a storage reduction type NOx catalyst carrying platinum Pt and potassium K on the surface of a substrate formed of alumina Al₂O₃ is used. In this regard, the same mechanism is obtainable even if other precious metal, alkali metal or rare earth is used.

First, as shown in Fig. 3A, when the incoming exhaust gas becomes lean, the concentrations of oxygen and NOx in the incoming exhaust gas increases, and such oxygen O₂ becomes a shape of O₂⁻ or O²⁻ and is adheres to the surface of platinum. On the other hand, NO in the incoming exhaust gas reacts with O₂⁻ or O²⁻ on the surface of platinum Pt to be NO₂ (2NO + O₂→ 2NO₂). Then the generated NO₂ is absorbed by potassium K that is an absorbent component, as nitrate; i.e., potassium nitrate KNO₃. As far as the oxygen concentration is high in the incoming exhaust gas, NO₂ is generated on the surface of platinum Pt, and NO₂ is absorbed by K as far as the absorbent capacity of NOx has not been saturated. Contrarily, when the oxygen concentration is lowered to decrease the generated amount of NO₂, the reaction proceeds in the counter direction (NO₃ → NO₂), whereby potassium nitrate KNO₃ in K is released as NO₂ from the absorbent. That is, when the oxygen concentration in the incoming exhaust gas is lowered, NOx is released from K. As a degree of the lean state in the incoming exhaust gas becomes lower, the oxygen concentration in the incoming exhaust gas is lowered, whereby if the degree of the lean state is made to be lower, NOx is released from K.

On the other hand, if the air-fuel ratio is made to be rich, HC and CO in the incoming exhaust gas are reacted with oxygen O₂⁻ or O²⁻ on platinum Pt and oxidized. Also, if the air-fuel ratio of the incoming exhaust gas is made to be rich, the oxygen concentration in the incoming exhaust gas is extremely lowered, whereby NO₂ is released from K and, as shown in Fig. 3B, is reacted with unburned HC and CO via platinum Pt to be reduced and cleaned, resulting in N₂ and O₂. When NO₂ disappears from the surface of platinum Pt in such a manner, NO₂ is sequentially released from K. Accordingly, if the air-fuel ratio becomes rich in the incoming exhaust gas, NOx is released from K in the short time duration.

Any kinds of reducing agent may be used in this operation, provided it generates reduction components such as hydrogen carbonate HC or carbon monoxide CO in the exhaust gas; examples thereof may be of a gas form, such as hydrogen or carbon monoxide, hydrocarbon in a liquid or gas form, such as propane, propylene or butane, or liquid fuel such as gasoline, gas oil or kerosene. In this embodiment, gas oil that is a fuel for the diesel engine is used as a reducing agent for the purpose of avoiding the troubles of storage or replenishment. The gas oil used as the reducing agent may be supplied to the NOx catalyst 20 by, for example, injecting the gas oil from a reducing agent injection valve separately provided in the exhaust gas passage 15 at a position upstream from the NOx catalyst 20 or injecting the gas oil from the fuel injection valve 14 into the combustion chamber 13 at a final stage of an expansion cycle or during an exhaust cycle which is called as a post injection. In this connection, such the supply of reducing agent for the purpose of releasing and reducing NOx in the NOx catalyst 20 is called as a rich spike.

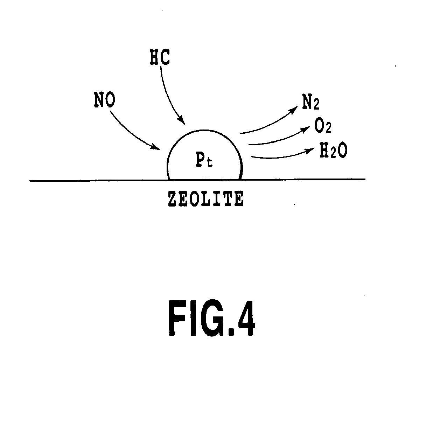

Next, in a case of the selective catalytic reduction type Nox catalyst, as shown in Fig. 4, the NOx catalyst 20 may be, for example, that carrying precious metal such as Pt on the surface of a substrate made of zeolite, that carrying transition metal such as Cu on the surface of the substrate by the ion exchange or that carrying titania/vanadium catalyst (V₂O₅/WO₃/TiO₂) on the surface of the substrate. In such a selective catalytic reduction type NOx catalyst, under the condition wherein the air-fuel ratio of the incoming exhaust gas is lean, HC and NO are steadily and simultaneously reacted to be N₂, O₂ or H₂O and cleaned. In this regard, for cleaning NOx, the existence of HC is necessary. Since unburned HC is always contained in the exhaust gas even if the air-fuel ratio is lean, it is possible to reduce and clean NOx by using this. Also, the rich spike may be carried out to supply the reducing agent as in the storage reduction type NOx catalyst. In such a case, ammonia or urea may be used as reducing agent other than those described before.

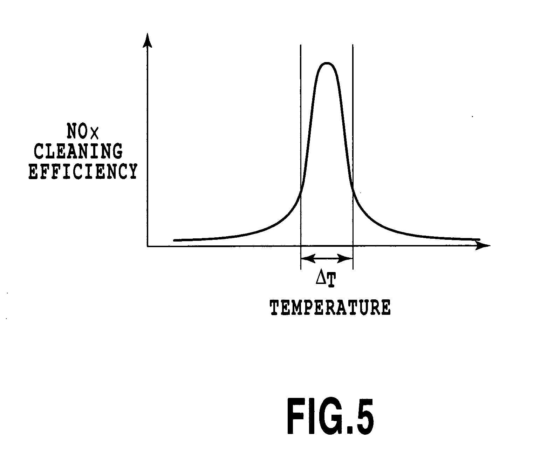

A drawback of such selective catalytic reduction NOx catalyst is in that a temperature window through which the catalyst becomes active is relatively narrow. That is, as shown in Fig. 5 wherein the relationship between the temperature of the incoming exhaust gas or that of a catalytic floor and the cleaning degree of NOx is shown, a high NOx cleaning degree is obtained only within a relatively narrow temperature range of ΔT and extremely drops on the outside of this temperature range. On the other hand, the storage reduction type NOx catalyst has a temperature window wider than that of the selective catalytic reduction type NOx catalyst, which is more advantageous than the former.

Returning to Fig. 1, according to this embodiment, means is provided for detecting an amount of PM collected by DPF 30 or a blockage degree of DPF by the collected PM. That is, exhaust gas pressure sensors 51 and 52 for detecting the pressure of the exhaust gas are provided in the exhaust gas passage 15 on the upstream and downstream sides from DPF 30, respectively, and connected to ECU 100 which is control means. ECU 100 determines the amount of PM colleted by DPF 30 or the blockage degree thereof based on the difference between the exhaust gas pressures detected by the upstream side and downstream side exhaust gas pressure sensors 51 and 52, respectively.

In this embodiment, while the upstream side exhaust gas pressure sensor 51 is disposed at a position downstream from the NOx catalyst 20 as well as upstream from the ozone feeding nozzle 40, it may be disposed on the downstream from the ozone feeding nozzle 40. Also, while the amount of PM or the blockage degree is detected based on the pressure difference between the upstream and downstream sides of DPF 30 in this embodiment, the amount of the collected PM or the blockage degree may be detected solely by one exhaust gas sensor disposed upstream from DPF 30. Further, the blockage degree may be detected by the integration with time of soot signals generated from a soot sensor disposed upstream from DPF. Similarly, it is obtained by estimating engine characteristic map data reserved in ECU and integrating the same with time.

Also, according to this embodiment, means is provided for detecting the exhaust gas temperature flowing into DPF 30 or the floor temperature of DPF. That is, a temperature sensor 53 is provided directly upstream from DPF 30, and ECU 100 calculates the exhaust gas temperature at a position directly upstream from DPF 30 based on a signal detected by the temperature sensor 53. The temperature sensor 53 detects the temperature of the exhaust gas at a position between the ozone feeding nozzle 40 and DPF 30. In this connection, a temperature detecting section of the temperature sensor 53 (a tip end in a case of a thermopile) is preferably located in the vicinity of a center of the upstream end surface of DPF 30. A temperature detection part of the temperature sensor 53 may be embedded in the interior of DPF 30 for the purpose of detecting the inner floor temperature of DPF 30.

Also, in this embodiment, means is provided for detecting the air-fuel ratio of the exhaust gas flowing into DPF 30. That is, an air-fuel ratio sensor 54 is provided at a position downstream from NOx catalyst 20 and upstream from DPF 30, so that ECU 100 is capable of calculating the air-fuel ratio of the exhaust gas based on a detected signal issued from the air-fuel ratio sensor 54. In this embodiment, the air-fuel ratio sensor 54 detects the air-fuel ratio of the exhaust gas on the upstream side from the ozone feeding nozzle 40. These sensors 51, 52, 53 and 54 are all attached to the casing 31.

Now, in this embodiment, since the NOx catalyst 20, the ozone feeding nozzle 40 and DPF 30 are sequentially arranged in the exhaust gas passage 15 from upstream, the following effects are obtainable. That is, since the NOx catalyst 20 is disposed upstream from the ozone feeding nozzle 40, it is possible to preliminarily remove NOx from the exhaust gas by the NOx catalyst 20. Thereby, the supplied ozone is prevented from being uselessly consumed due to the reaction with NOx in the exhaust gas. Thus, it is possible to use a more amount of ozone for the purpose of oxidizing and removing PM collected by DPF 30. Accordingly, the PM cleaning efficiency by ozone is improvable. In this connection, the removal of PM collected by DPF 30 by means of the oxidation is referred to as regeneration, and DPF 30 recovers its inherent performance by the regeneration.

Here, the reactive consumption of NOx and ozone will be described in more detail. If is assumed that Ozone O₃ is reacted with NOx, particularly NO in the exhaust gas, the reactive formula is as follows:

NO + O₃ → NO₂ + O₂ (1)

NO₂ generated by this reaction is further reacted with ozone O₃ as follows:

NO₂ + O₃ → NO₃ + O₂ (2)

NO₃ thus generated is decomposed as follows:

2NO₃ → 2NO₂ + O₂ (3)

As seen in the formula (1), ozone O₃ is consumed by the oxidation of NO, and as seen in the formula (2), ozone O₃ is consumed by the oxidation of NO₂. And, as seen in the formula (3), NO₂ on the right side becomes NO₂ on the left side of the formula (2) and consumes ozone O₃ for the purpose of oxidizing this NO₂ on the left side of the formula (2).

In such a manner, NOx and ozone repeat the chain reaction. Accordingly, even if ozone is fed to DPF 30 directly before the same, much ozone is consumed for the purpose of oxidizing and decomposing NOx when NOx is contained in the exhaust gas at this position, whereby an amount of ozone given to DPF 30 is significantly decreased. Since electric power is required for generating ozone by the ozone generator 41, such useless consumption of ozone results in the useless consumption of electric power as well as the worsening of fuel consumption.

Contrarily, if the NOx catalyst 20 is disposed upstream from the ozone feeding nozzle 40 and DPF 30, as in this embodiment, since it is possible to feed ozone to the exhaust gas after NOx is removed therefrom by the NOx catalyst 20, the supplied ozone is prevented from being consumed by the reaction with NOx, instead effectively usable for oxidizing PM in DPF 30 and removing the same.

More specifically, when the NOx catalyst 20 is of the storage reduction type, NO on the left side of the formula (1) becomes NO₂ by the action of precious metal (Pt in the illustrate embodiment) which is a reaction component, and the generated NO₂ is absorbed by K or others which is an absorption component as described before with reference to Figs. 3A and 3B. Accordingly, NO and NO₂ are not discharged from the NOx catalyst 20 and the reaction of them with ozone is prevented. On the other hand, if the NOx catalyst 20 is of a selective catalytic reduction type, as described before with reference to Fig. 4, the discharge of NO and NO₂ from the NOx catalyst 20 is restricted. Thereby the reaction thereof with ozone is prevented.

The timing for feeding ozone is first preferable when the amount of PM collected by DPF 30 reaches a predetermined value or more. Thus, ECU 100 executes to feed ozone by switch-on the ozone generator 41 when the difference (Pu - Pl) between an upstream side exhaust gas pressure Pu detected by the upstream exhaust pressure sensor 51 and a downstream side exhaust gas pressure P1 detected by the downstream exhaust pressure sensor 52 reaches a predetermined value or more. Contrarily, if the difference (Pu - Pl) is lower than the predetermined value, ECU 100 stops the feeding of ozone by switching-off the ozone generator 41.

The timing for feeding ozone is secondarily preferable when the temperature of exhaust gas flowing into DPF 30 or the floor temperature of DPF 30 is within a proper range wherein the ozone is effectively usable. The temperature range is, for example from 150 to 250°C. Accordingly, ECU 100 executes the feeding of ozone by switching-on the ozone generator 41 when the temperature detected by the temperature sensor 53 is within this range. Alternatively, if the detected temperature is not within such a range, ECU 100 stops the feeding of ozone by switching-off the ozone generator 41.

The timing for feeding ozone is thirdly preferable when unfavorable components causing the reaction with zone are not contained in the exhaust gas flowing into DPF 30. Such unfavorable components are, for example, NOx described before and unburned HC that may react with ozone to uselessly consume ozone as described in more detail later. Whether or not such unfavorable components are contained in the exhaust gas can be assumed by the air-fuel ratio of the exhaust gas detected by the air-fuel ratio sensor 54. Accordingly, if it is determined that unfavorable components are contained based on the detected air-fuel ratio in the exhaust gas, ECU 100 stops the supply of ozone by switching-off the ozone generator 41. On the other hand, if it is determined that the unfavorable components are not contained, ECU 100 executes the supply of ozone by switching-on the ozone generator 41.

These three conditions may be optionally combined and suitably coupled by the AND/OR relationship. According to this embodiment, while ozone generated by switching-on the ozone generator 41 is immediately fed, it may be possible to store the preliminarily generated ozone and feed the same by switching a valve.

Also, it is possible to pressurize ozone by a pump or a compressor prior to being fed.

Test results using model gas in relation to the first embodiment will be described below.

### (I) Tests wherein the reduction type NOx catalyst is used

### (1) Test equipment

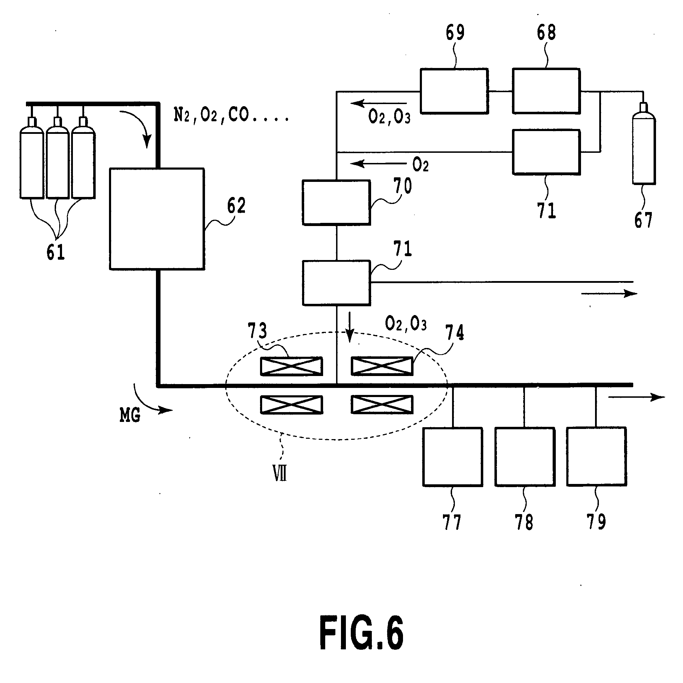

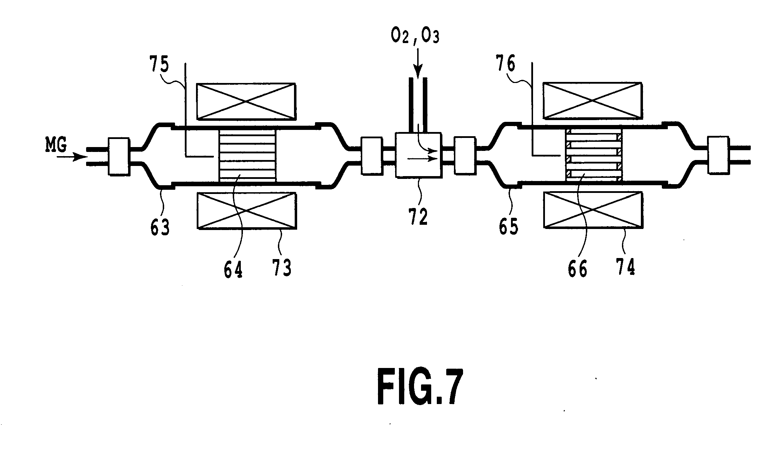

Fig. 6 illustrates an overall structure of a test equipment, and Fig. 7 illustrates a detail of an area VII of Fig. 6. Reference numeral 61 denotes a plurality of gas bombs, each filled with raw material gas for producing model gas similar to exhaust gas of the diesel engine. The raw material gas referred to herein is N₂, O₂, CO or others. Reference numeral 62 denotes a model gas generator provided with a mass flow controller for mixing predetermined amounts of the respective raw material gasses to produce the model gas MG. The model gas MG passes NOx catalyst 64 disposed in an upstream quartz tube 65, then passes DPF 66 disposed in a downstream quartz tube 65, and is discharged outside from an exhaust gas duct not shown.

As shown in Fig. 6, gaseous oxygen O₂ fed from an oxygen bombs 67 is bifurcated, one of which is fed to an ozone generator 69 after a flow rate thereof has been controlled by a flow rate control unit 68. In the ozone generator 69, oxygen is selectively and partially converted to ozone O₃. Such oxygen and ozone (or oxygen alone) reaches an ozone analyzer 70. Other of the bifurcated oxygen is mixed with gas fed from the ozone generator 69 after a flow rate thereof has been controlled by another flow rate control unit 71, and reaches the ozone analyzer 70. In the ozone analyzer 70, the concentration of ozone in gas flowing thereto; i.e., the concentration of ozone in the gas supplied to DPF 66 is measured, and thereafter, the flow rate of the fed gas is controlled by the flow rate control unit 71. Redundant fed gas is discharged outside from a discharge duct not shown, and the gas which flow rate has been controlled is mixed with the model gas MG in a three-way elbow 72 located between the upstream quartz tube 63 and the downstream quartz tube 65, and thereafter, fed to DPF 66 together with the model gas MG.

On the outer circumferences of the upstream quartz tube 63 and the downstream quartz tube 65, electric heaters 73 and 74 are provided, respectively, to control the temperature of the NOx catalyst 64 and DPF 66. Also, temperature sensors 75 and 76 are provided for measuring the temperatures at positions directly upstream from the NOx catalyst 64 and DPF 66, respectively.

On the downstream side of DPF 66, an exhaust gas analyzer 77 for measuring the concentration of HC, CO and NOx, an exhaust gas analyzer 78 for measuring the concentration of CO₂ and an ozone analyzer 79 for measuring the concentration of ozone are disposed in series from upstream.

### (2) Test conditions

The electric heater 73, 74 were controlled so that the temperature detected by the temperature sensors 75 and 76 became 250°C. The composition of the model gas is 210 ppm of NO, 5% of O₂, 3% of H₂O except for the residual N₂ in the volume concentration. A flow rate of the model gas is 9.5 liters, and a pressure of the model gas is 0.4 MPa. The composition of the fed gas is 20000 ppm of ozone O₃ and the residual of O₂. In this regard, the ozone generator 69 is made ON so that ozone can be supplied. If the ozone generator 69 is made off to stop the feeding of ozone, the fed gas is solely O₂. The flow rate of the fed gas is 0.5 liters/min.

### (3) Test method

N₂ is made to flow as model gas until the temperature detected by the temperature sensors 75 and 76 reaches a constant value (250°C), and after the temperature becomes constant, NO and O₂ are added to the model gas. Simultaneously therewith, oxygen is introduced into the ozone generator 69. When ozone is generated, the ozone generator 69 is made ON simultaneously with the introduction of oxygen. An amount of oxidation of PM (the oxidation rate) in DPF 66 was calculated by the concentration of CO and CO₂ detected by the exhaust gas analyzers 77, 78. That is, a product of the flow rate of the model gas, the detected volume concentration and the measurement time is divided by a volume corresponding to 1 mol (for example, 22.4 liters) to obtain the number of moles during the measurement time, and based on this number of moles, the amount of oxidation of PM (oxidation rate) is calculated.

### (4) Example and comparative examples

### Example 1

The NOx catalyst 64 and DPF 66 of the following specification were disposed, and the ozone generator69 was switched on to measure the oxidation rate of PM.

NOx catalyst (of a storage reduction type)

A honeycomb structure made of cordierite having a diameter of 30 mm, a length of 25 mm, a cell wall thickness of 5 mil (milli inch length, 1/1000 inch) and the number of cells of 400 cpsi (cells per square inch) was coated with γ-Al₂O₃. A coated amount was 120 g/L (wherein a denominator L means per 1 liter of catalyst). Barium acetate was coated thereon with water and calcined at 500°C for 2 hours. An amount of barium acetate was 0.2 mol/L. This catalyst was immersed in aqueous solution containing dinitrodiammine platinum so that Pt is carried thereon, and after being dried, calcined at 450°C for one hour. An amount of carried Pt was 2g/L.

### DPF

PM was collected on DPF made of cordierite (not coated with catalyst) having a diameter of 30 mm, a length of 50 mm, a cell wall thickness of 12 mil and the number of cells of 300 cpsi. PM was collected by proving a container capable of arranging twelve honeycomb structures made of cordierite having a length of 30 mm and a length of 50 mm in parallel to each other in the exhaust pipe for a diesel engine having a displacement volume of 2 liters, through which passes exhaust gas under the driving conditions of 2000 rpm and 30 Nm for one hour. The tests were conducted while the honeycomb structure collecting PM was disposed in the quartz tube so that a surface carrying PM is opposed to the upstream side.

### Comparative example 1

DPF having the same structure as that in Example 1 was solely disposed without providing the NOx catalyst on the upstream side thereof, and the oxidation rate was measured while the ozone generator 69 is made on.

### Comparative example 2

The NOX catalyst and DPF having the same structure as those in Example 1 were disposed, and the oxidation rate was measured while the ozone generator 69 was made off.

### Comparative example 3

DPF having the same structure as that in Example 1 was solely disposed without providing the NOx catalyst on the upstream from DPF, and the oxidation rate was measured while the ozone generator 69 was made off.

### (5) Test results

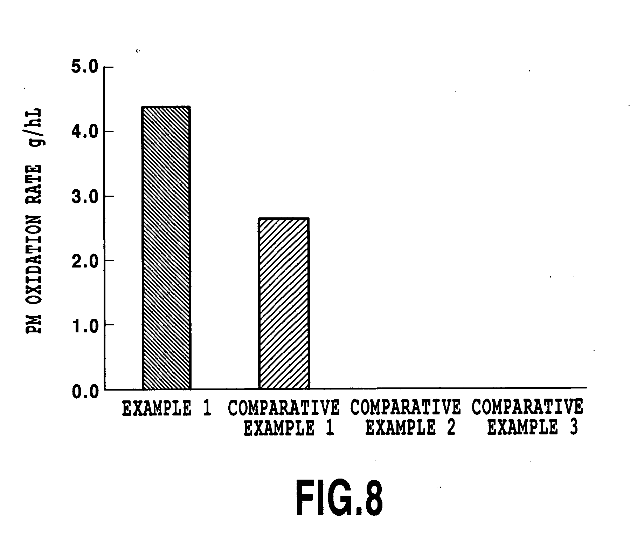

Fig. 8 illustrates the PM oxidation rates in five minutes after N₂ is changed to the model gas (in other words, after O₂ is introduced into the ozone generator). In the drawing, a unit g/hL of the PM oxidation rate on the vertical axis represents grams of oxidized PM per one hour in DPF of 1 liter. In Comparative examples 2 and 3, the oxidation of PM could not be confirmed. By comparing Example 1 with Comparative example 1, it will be understood that the NOx catalyst of the storage reduction type absorbs NOx and the reaction of NOx with O₃ is restricted on the downstream side of the catalyst. By the comparison of Example 1 with Comparative examples 2 and 3, the effect of the addition of ozone will be understood. That is, PM is not oxidized unless ozone is added.

### (II) Tests wherein the selective catalytic reduction type NOx catalyst is used

### (1) Test equipment

A test equipment was the same as that in the above-mentioned tests (I).

### (2) Test conditions

Test conditions were the same as those in the above-mentioned tests (I), except that the composition of model gas represented by the volume concentration is NO of 210 ppm, C₃H₆ of 500 ppm, O₂ of 5%, H₂O of 3% and the residual N₂. Propylene C₃H₆ is added herein since HC is necessary for cleaning NOx in the NOx catalyst of a selective catalytic reduction type. While several tens kinds of HC are discharged from the engine, propylene C₃H₆ has the largest concentration among them, whereby propylene C₃H₆ is used as a representative of HC.

### (3) Test method

N₂ is made to flow as model gas until the temperature detected by the temperature sensors 75 and 76 reaches a constant value (250°C), and after the temperature becomes constant, NO, C₃H₆ and O₂ are added to the model gas. Simultaneously therewith, oxygen is introduced into the ozone generator 69. When ozone is generated, the ozone generator 69 is made ON simultaneously with the introduction of oxygen. An amount of oxidation of PM (the oxidation rate) in DPF 66 was calculated by the concentration of CO and CO₂ detected by the exhaust gas analyzers 77, 78. At that time, by taking the concentrations of CO and CO₂ generated from C₃H₆ introduced into the model gas into account, the carbon balance was calculated.

### (4) Example and comparative examples

### Example 2

The NOx catalyst 64 and DPF 66 of the following specification were disposed, and the ozone generator 69 was switched on to measure the oxidation rate of PM.

NOx catalyst (of a selective catalytic reduction type)

A honeycomb structure made of cordierite having a diameter of 30 mm, a length of 25 mm, a cell wall thickness of 4 and the number of cells of 400 cpsi was coated with zeolite of ZSM-5 type. A coated amount was 120 g/L. Pt was carried thereon by using aqueous solution containing dinitro-diamine platinum and after being dried, calcined at 450°C for 1 hour. An amount of carried Pt was 2g/L.

### DPF

DPF was the same as that in the above-mentioned tests (I).

### Comparative example 4

DPF having the same structure as that in Example 2 was solely disposed without providing the NOx catalyst on the upstream from DPF, and the oxidation rate was measured while the ozone generator 69 was made on.

### Comparative example 5

The NOX catalyst and DPF having the same structure as those in Example 2 were disposed, and the oxidation rate was measured while the ozone generator 69 was made off.

### Comparative example 6

DPF having the same structure as that in Example 2 was solely disposed without providing the NOx catalyst on the upstream from DPF, and the oxidation rate was measured while the ozone generator 69 was made off.

### (5) Test results

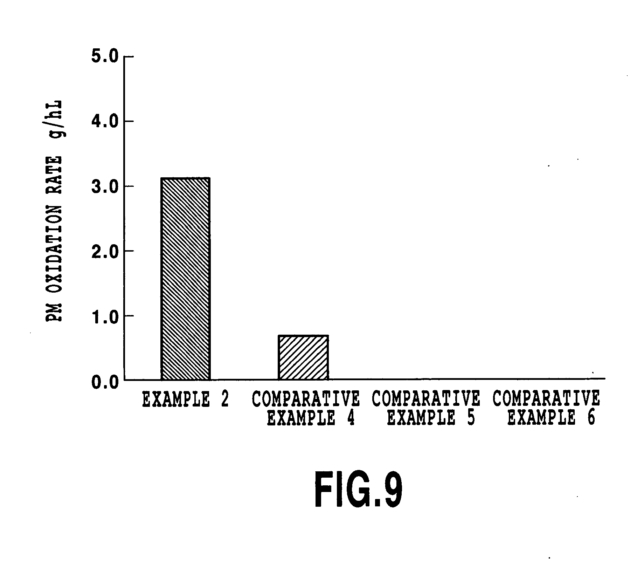

Fig. 9 illustrates the PM oxidation rates in five minutes after N₂ is changed to the model gas (in other words, after O₂ is introduced into the ozone generator). In Comparative examples 5 and 6, the oxidation of PM could not be confirmed. By comparing Example 2 with Comparative example 4, it will be understood that the NOx catalyst of the selective catalytic reduction type reduces NOx and the reaction of NO with O₃ is restricted on the downstream side of the catalyst. In this connection, in a case of this NOx catalyst of the selective catalytic reduction type, it will be understood that excessive C₃H₆ is not sufficiently cleaned, and C₃H₆ passing through the NOx catalyst reacts with ozone directly before DPF to consume ozone, whereby ozone is not thoroughly used for oxidizing PM. By the comparison of Example 2 with Comparative examples 5 and 6, the effect of the addition of ozone will be understood. That is, PM is not oxidized unless ozone is added.

As apparent from the above description, the present invention is suitably applicable to a system wherein the temperature of exhaust gas is relatively high and the effect of the NOx catalyst is easily obtainable, namely, a system capable of sufficiently cleaning NOx by the action of the NOx catalyst. A typical example of such a system is a diesel engine for an automobile. Also, it is possible to separately use the NOx catalyst of a selective catalytic reduction type when the concentration of reducing agent (HC) in the exhaust gas is high, and use that of a storage reduction type in the other cases.

### (Second embodiment)

Next, a second embodiment according to the present invention will be described with reference to the attached drawings. In this regard, the same reference numerals are used in the drawings for denoting the same parts as those in the first embodiment, and the detailed explanation thereof will be eliminated.

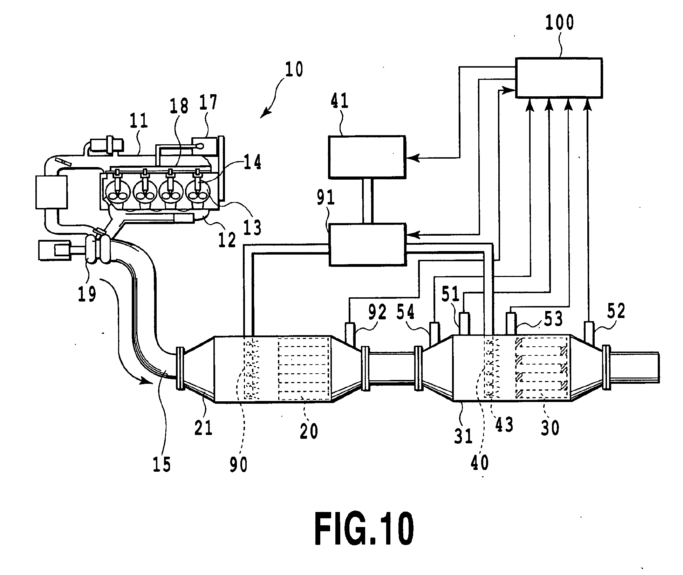

Fig. 10 diagrammatically illustrates a system of a device for cleaning exhaust gas of an internal combustion engine according to the second embodiment. As illustrated, in the second embodiment, second ozone feeding nozzles 90 are provided as separate means for feeding ozone (O₃) in an exhaust gas passage 15 on the upstream side from NOx catalyst. The second ozone feeding nozzles 90 are of the same structure as the ozone feeding nozzles 40 disposed upstream from DPF 30. The second ozone feeding nozzles 90 and the ozone feeding nozzles 40 are connected to a flow rate control unit 91, and the flow rate control unit 91 is connected to the ozone generator 41. The flow rate control unit 91 distributes ozone delivered from the ozone generator 41 to the ozone feeding nozzles 40 and the second ozone feeding nozzles 90, respectively, at a predetermined ratio. There is a case wherein ozone is supplied to either one of them. The flow rate control unit 91 is connected to ECU 100 and controlled thereby.

To determine an amount of ozone fed from the second ozone feeding nozzles 90, a NOx sensor 92 is provided as means for detecting the concentration of NOx relating to the NOx catalyst 20. The NOx sensor 92 detects the concentration of NOx in the exhaust gas in the exhaust gas passage 15. In this embodiment, the NOx sensor 92 is disposed at a position downstream from the ozone feeding nozzle 90 and upstream from the ozone feeding nozzle 40. The NOx sensor, however, may be disposed at a position upstream from the second ozone feeding nozzles 90. The NOx sensor 92 is connected to ECU 100 and ECU 200 calculates the concentration of NOx based on the output from the NOx sensor 92. The NOx sensor 92 and the second ozone feeding nozzles are attached to the casing 21.

In the first embodiment, there is a problem in that when the temperature of exhaust gas or the floor temperature of the NOx catalyst is low, the catalyst does not effectively operate, whereby NOx is not cleaned in the NOx catalyst 20 to discharge NOx downstream from the NOx catalyst 20. The discharged NOx reacts with ozone fed from the ozone feeding nozzles 40 in the above-mentioned manner and consumes ozone.

Contrarily, according to the second embodiment, if the temperature of exhaust gas or the floor temperature of the NOx catalyst is low, it is possible to add ozone from the second ozone feeding nozzles 90 to the exhaust gas to clean NOx by the NOx catalyst. Thereby, even if the temperature is too low to effectively function the NOx catalyst, NOx is prevented from being discharged downstream from the NOx catalyst 20, whereby ozone fed for the purpose of removing PM is inhibited from being uselessly consumed, instead, effectively used for the removal of PM.

The mechanism for cleaning NOx in the NOx catalyst will be described. First, if the NOx catalyst 20 is of a storage reduction type, NO in NOx reacts with ozone as represented by the following formula:

NO + O₃ → NO₂ + O₂ (1)

NO₂ thus generated is absorbed or trapped by NOx absorbent component such as K. In this connection, NO₂ generated by the reaction represented by the above-mentioned formulas (2) and (3) is also absorbed by the NOx absorbent component in the same manner. Accordingly, NOx is prevented from being discharged from the NOx catalyst 20. Here, Pt or others is a sole component not operated at a lower temperature whereby the function of the NOx absorbent component is not damaged even at a low temperature. Thereby, it is possible to absorb NO₂ as described above even at a low temperature.

When the NOx catalyst is of a selective catalytic reduction type, NOx is reduced and cleaned by the reaction with NO₂ generated by the reaction represented by the formulas (1) to (3).

When ECU 100 determines during the oxidation removal of PM that the concentration of NOx in the exhaust gas is a predetermined value (hardly equal to zero) of more based on the output from the NOx sensor 92, ECU controls the flow rate control unit 91 to feed ozone from the second ozone feeding nozzles 90 as well as controls the flow rate of ozone to a predetermined value in accordance with the NOx concentrations. That is, if the NOx concentration in the exhaust gas reaches the predetermined value or more, this means that the temperature of exhaust gas or the catalyst floor is too low to clean NOx in the NOx catalyst 20. Accordingly, as a countermeasure thereto, ozone is fed to the upstream from the NOx catalyst 20 to accelerate the cleaning of NOx by the NOx catalyst 20. At that time, an amount of ozone fed from the flow rate control unit 90; i.e., the second ozone feeding nozzles 90 may be controlled in a feedback manner. In this regard, when the NOx sensor 92 is provided upstream from the NOx catalyst 20, ozone is fed from the second ozone feeding nozzles 90 if the concentration of NOx detected by the NOx sensor 92 reaches the predetermined value or more at which NOx is removable by the NOx catalyst 20. Of course, means for detecting the temperature of exhaust gas flowing into the NOx catalyst or that of the catalyst floor may be provided for the purpose of starting or stopping the supply of ozone from the second ozone feeding nozzles 90 as well as controlling the feeding rate of ozone in accordance with the temperature of exhaust gas or that of the catalyst floor. In this case, it is preferable that ozone is fed when the temperature of exhaust gas or that of the catalyst floor is at a predetermined value or lower.

Since tests were conducted also in relation to the second embodiment while using the model gas, which results were as follows:

### (I) Tests wherein the storage reduction type NOx catalyst is used

### (1) Test equipment

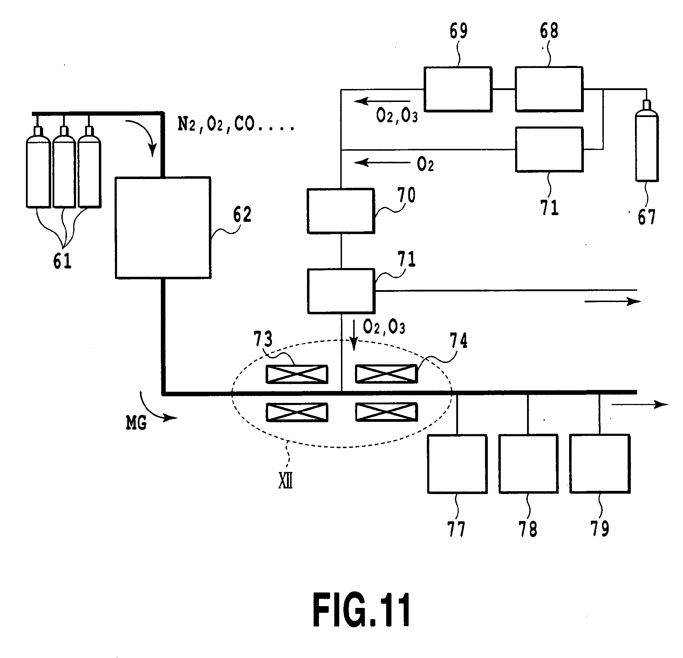

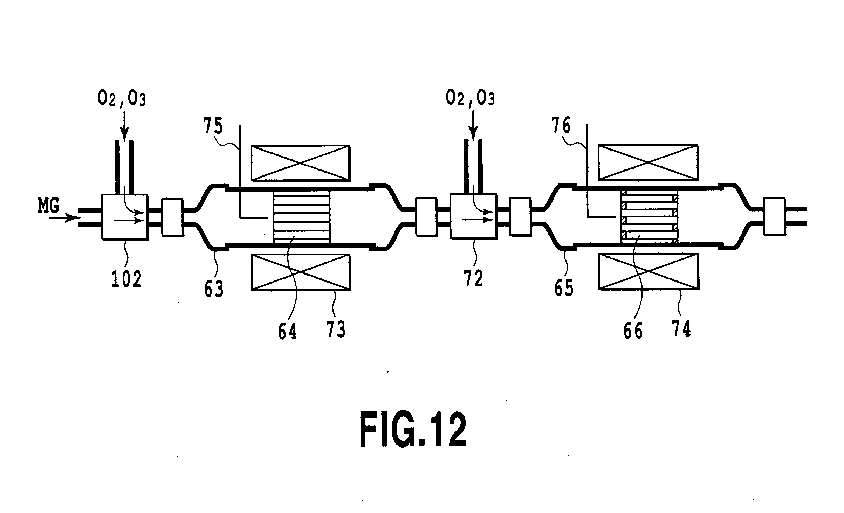

Fig. 11 illustrates an overall structure of a test equipment, and Fig. 12 illustrates a detail of an area XII of Fig. 11. The test equipment is the same as that in the first embodiment, except for the following points. According to the test equipment in the second embodiment, fed gas consisting of ozone and oxygen or oxygen only is fed to a three-way elbow 10 disposed at a position between the NOx catalyst 64 and the DPF 66 and another elbow 102 disposed at a position upstream from the NOx catalyst 64 at a predetermined dividing ratio, and mixed with the model gas.

### (2) Test conditions

The test conditions are the same as those disclosed in the item (1) (2) of the first embodiment except for the following points. According to the second embodiment, the electric heaters 73 and 74 are controlled so that the temperature detected by the temperature sensors 75 and 76 becomes 100°C. A reason why this target temperature is set lower than 250°C which is the target temperature of the first embodiment is to test the effect of the ozone supply to the NOx catalyst 64 at a low temperature. A flow rate of the fed gas is 125 cc/min at a position upstream from the NOx catalyst 64 and 375 cc/min at a position between the NOx catalyst 64 and DPF 66. In this regard, in Comparative example 10 described later, the fed gas is not fed to the position upstream from the NOx catalyst 64, but is fed to the position between the NOx catalyst 64 and DPF 66 at a flow rate of 500 cc/min.

### (3) Test method

The test method is the same as that described in the item (I) (3) of the first embodiment.

### (4) Example and Comparative examples

### Example 3

Example 3 is the same as Example 1 described in the item (I) (4) of the first embodiment.

### Comparative example 7

Comparative example 7 is the same as Comparative example 1 described in the item (I) (4) of the first embodiment.

### Comparative example 8

Comparative example 8 is the same as Comparative example 2 described in the item (I) (4) of the first embodiment.

### Comparative example 9

Comparative example 9 is the same as Comparative example 3 described in the item (I) (4) of the first embodiment.

### Comparative example 10

The same NOx catalyst and DPF as those in Example 3 were arranged and the oxidation rate of PM was measured in a state that the ozone generator 69 is made on. In this case, as described before, fed gas was not fed to upstream from the NOx catalyst 64 but was fed to a position between the NOx catalyst 64 and DPF 66 at a rate of 500 cc/min.

### (5) Test results

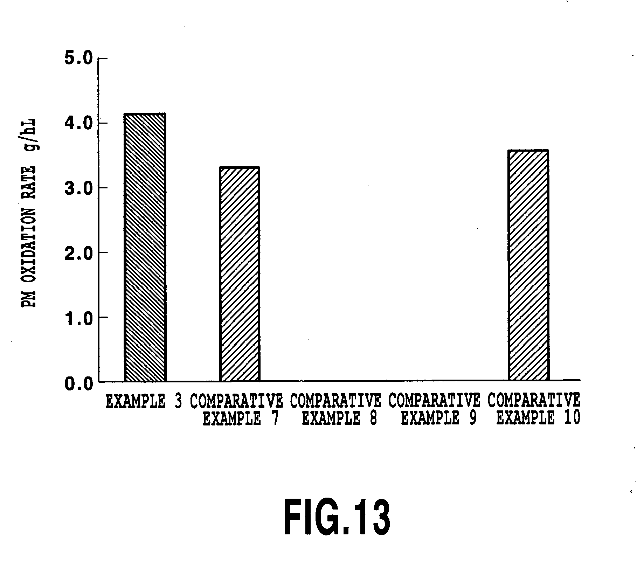

Fig 13 illustrates the comparison of the oxidation rates of PM in five minutes between the respective example and comparative examples after switching the model gas composition from N₂ (after O₂ is introduced into the ozone generator). As shown, the oxidation of PM could not be confirmed in Comparative examples 8 and 9. By the comparison of Example 3 with Comparative example 7, it is understood that the NOx catalyst of a storage reduction type absorbs NOx to restrict the reaction of O₃ with NO downstream from this catalyst. That is, if ozone is not added, PM is not oxidized. By the comparison of Example 3 with Comparative example 10, the effect of the addition of ozone to the upstream side of the NOx catalyst will be apparent. Particularly, in spite of the total flow rate of the fed gas; i.e., 500 cc/min in Example 3 is the same as that in Comparative example 10, the oxidation rate of PM is higher when ozone is fed to the upstream side of the NOx catalyst than when it is not fed. That is, it is concluded that even if ozone is partially consumed for the purpose of cleaning NOx, the effect thereof is better than when more ozone is fed to DPF without cleaning Nox.

### (II) Tests wherein the selective catalytic reduction type NOx catalyst is used

### (1) Test equipment

The test equipment is the same as that of (I).

### (2) Test conditions

The test conditions are the same as those described in item (II) (2) of the first embodiment, except for the following point. That is, as in the same manner as the storage reduction type catalyst, the temperature of the electric heaters 73 and 74 detected by the temperature sensor 75 and 76 is controlled at 100°C. The flow rate of fed gas is 125 cc/min at a position on the upstream side of the NOx catalyst 64 and 375 cc/min at a position between the NOx catalyst 64 and DPF 66. In this regard, in Comparative example 14 described later, the fed gas is not fed to the upstream side of the NOx catalyst 64 but fed to the position between the NOx catalyst 64 and DPF 66 at 500 cc/min.

### (3) Test method

The test method is the same as that described in item (II) (2) of the first embodiment. (4) Examples and Comparative examples

### Example 4

Example 4 is the same as Example 2 described in item (II) (4) of the first embodiment.

### Comparative example 11

Comparative example 11 is the same as Comparative example 4 described in item (II) (4).

### Comparative example 12

Comparative example 12 is the same as Comparative example 5 described in item (II) (4).

### Comparative example 13

Comparative example 13 is the same as Comparative example 6 described in item (II) (4).

### Comparative example 14

DPF having the same structure as that in Example 4 was solely disposed without providing the NOx catalyst on the upstream from DPF, and the oxidation rate was measured while the ozone generator 69 was made off.

### (5) Test results

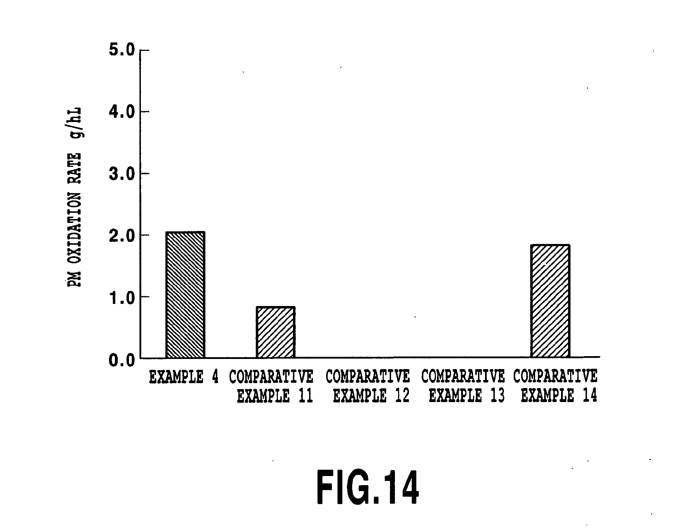

Fig. 14 illustrates the PM oxidation rates in five minutes after N₂ is changed to the model gas (in other words, after O₂ is introduced into the ozone generator). In Comparative examples 12 and 13, the oxidation of PM could not be confirmed. By comparing Example 4 with Comparative example 11, it will be understood that the NOx catalyst of the selective catalytic reduction type reduces NOx and the reaction of NO with O₃ is restricted on the downstream side of the catalyst. In this connection, in a case of this NOx catalyst of the selective catalytic reduction type, it will be understood that excessive C₃H₆ is not sufficiently cleaned, and C₃H₆ passing through the NOx catalyst reacts with ozone directly before DPF to consume ozone, whereby ozone is not thoroughly used for oxidizing PM. By the comparison of Example 4 with Comparative examples 12 and 13, the effect of the addition of ozone will be understood. That is, PM is not oxidized unless ozone is added.

By the comparison of Example 4 with Comparative example 14, the effect of the addition of ozone to the upstream side of the NOx catalyst will be apparent. Particularly, it is concluded that even if ozone is partially consumed for the purpose of cleaning NOx, the effect thereof is better than when more ozone is fed to DPF without cleaning Nox.

### (Third embodiment)

Next, a third embodiment according to the present invention will be described with reference to the attached drawings. In this regard, the same reference numerals are used in the drawings for denoting the same parts as those in the first embodiment, and the detailed explanation thereof will be eliminated.

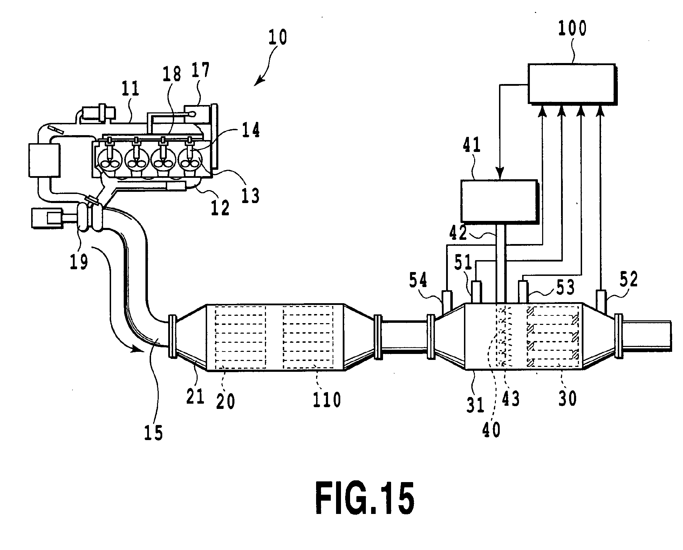

Fig. 15 diagrammatically illustrates a system of a device for cleaning exhaust gas of an internal combustion engine according to the second embodiment. As illustrated, in the third embodiment, an oxidation catalyst 110 is disposed in a casing 21 common to the NOx catalyst 20.

In the first embodiment, as described before, when the NOx catalyst 20 is of a storage reduction type, the rich spike (the separate injection or the post injection of gas oil) is executed for releasing or reduction-cleaning NOx stored in the NOx catalyst 20. Alternatively, if such rich spike is not executed, HC in the exhaust gas passes through the NOx catalyst 20 with substantially no interference. On the other hand, when the NOx catalyst 20 is of a selective catalytic reduction type, HC in the exhaust gas similarly passes through the NOx catalyst 20 with substantially no interference unless the NOx catalyst 20 is within an active temperature range, and even if it is within the active temperature range and reducing agent (such as gas oil) is added to the exhaust gas, excessive HC not cleaned by the NOx catalyst 20 is discharged from the NOx catalyst 20. When HC is discharged from the NOx catalyst 20 in such a manner, this HC reacts with ozone fed from the ozone feeding nozzles 40 to uselessly consume ozone. That is, ozone O₃ partially oxidizes HC to generate HC oxide such as CO, CO₂ or H₂O. If so, such an amount of consumed ozone cannot be fed to DPF to reduce the PM oxidation efficiency.

Contrary to this, according to the third embodiment, since the oxidation catalyst 110 is disposed at a position downstream from the NOx catalyst 20 and upstream from the ozone feeding nozzles 40, it is possible to oxidize HC discharged from the NOx catalyst 20 and cleaned. Thereby, it is possible to restrict the discharge of HC from the oxidation catalyst 110 and prevent ozone from being consumed by the discharged HC, whereby the PM oxidation efficiency is improved.

Here, the oxidation catalyst 110 is a catalyst for reacting unburned components such as HC or CO with O₂ to generate CO, CO₂, H₂O or others, and is formed of Pt/CeO₂, Mn/CeO₂, Ni/CeO₂, Cu/CeO₂ or others.

In the third embodiment, it is possible to combine structures of the second embodiment. That is, the second ozone feeding nozzles 90, the flow rate control unit 91 and the NOx sensor 92 used in the second embodiment may be provided in the third embodiment.

Tests were conducted also in this third embodiment by using model gas, results of which are as follows.

### (1) Test equipment

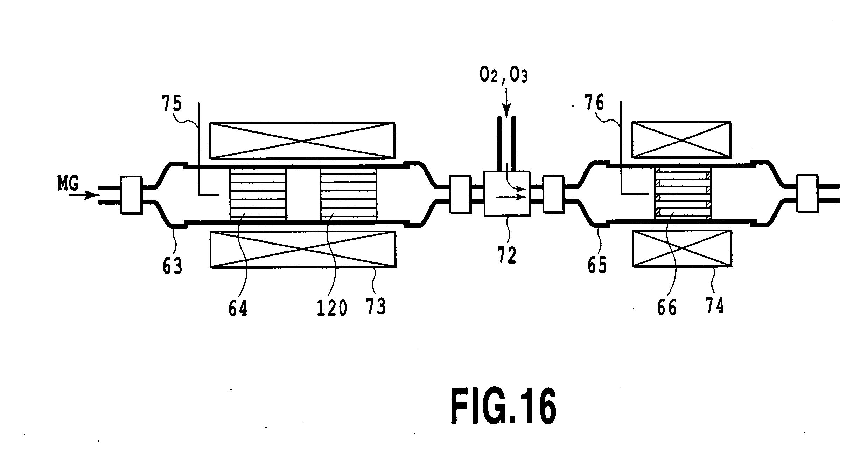

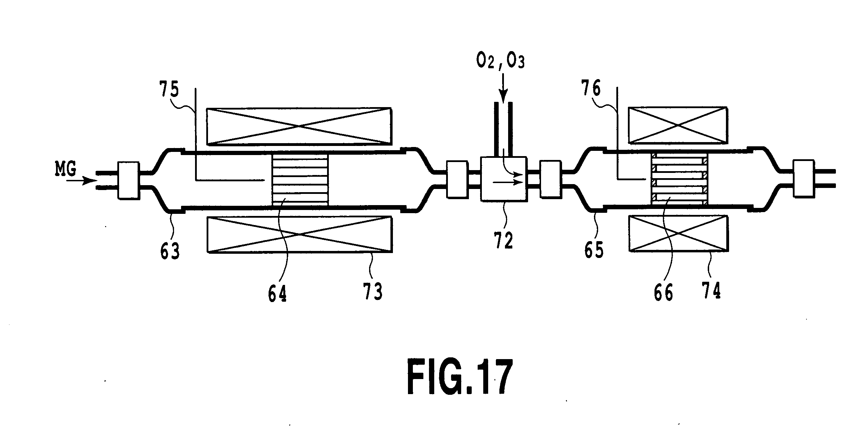

An overall structure of the test equipment is the same as that in the first embodiment shown in Fig. 6. In this connection, details of the area VII in Fig. 6 are different from each other in accordance with Example and Comparative examples described later. As shown in Fig. 16, in Example 5 described later, the NOx catalyst 64 and the oxidation catalyst 120 are arranged in series in the upstream quartz tube 63. For this purpose, the upstream quartz tube 63 is longer than that used in the first embodiment. In the Comparative example 15 described later, as shown in Fig. 17, the NOx catalyst is solely disposed in the upstream quartz tube 63. The NOx catalyst 64 is of a selective catalytic reduction type in this embodiment and that of a storage reduction type is not tested.

### (2) Test conditions

The test conditions are the same as those described in item (II) (2) of the first embodiment.

### (3) Test method

The test method is the same as tat described in item (II) (3) of the first embodiment.

### (4) Example and Comparative examples

### Example 5

The NOx catalyst 64 and DPF 66 the same as those used in Example 2 described in the item (II) (4) of the first embodiment. A honeycomb structure is used as the oxidation catalyst, made of cordierite having a diameter of 30 mm, a length of 25 mm, a cell wall thickness of 4 mil and the number of cells of 400 cpsi was coated with Ce-Zr composite oxide. A coated amount is 120g /L. Pt was carried thereon by using aqueous solution containing dinitrodiamine platinum and, after being dried, calcined at 450°C for one hour. The amount of Pt tcarried thereon is 2g/L.

### Comparative example 15

Comparative example 15 is the same as Example 2 described in the item (II) (4) of the second embodiment.

### (5) Test results

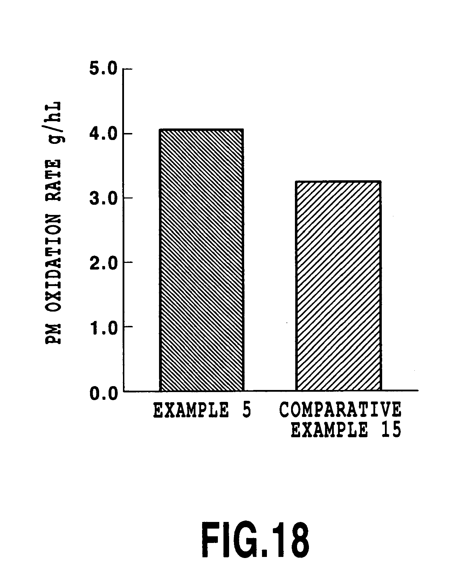

Fig. 18 illustrates the PM oxidation rates in five minutes after N₂ is changed to the model gas (in other words, after O₂ is introduced into the ozone generator). According to this result, it will be understood that by providing the oxidation catalyst between the NOx catalyst and the ozone feeding nozzles, the PM oxidation rate is improved.

As shown in Fig. 15, while the oxidation catalyst 110 is disposed downstream from the NOx catalyst 20, the oxidation catalyst 110 may be provided upstream from the NOx catalyst 20. Thereby, it is possible to enhance the operation of the NOx catalyst 20 since or CO in the exhaust gas is partially oxidized by the oxidation catalyst 110 prior to being introduced into the NOx catalyst 20. Particularly, since a large amount of HC is discharged in the interval from the initiation of the staring stage of the engine to the completion of the warming-up stage, the oxidation catalyst may be disposed at a position as close as possible to the engine body in the upstream direction to accelerate the activity of the oxidation catalyst so that HC is positively cleaned thereby. Even in the above-mentioned case wherein the oxidation catalyst 110 is disposed upstream from the NOx catalyst 20, since the object for preliminarily remove HC by the oxidation catalyst 110 before the supply of ozone is achievable, there may be cases wherein such a reverse arrangement may be employed.

While the present invention has been described with reference to the preferred embodiments, it is possible that the present invention may include other embodiments. For example, while the wall flow type DPF is employed as the PM collecting device in the above-mentioned embodiments, many other filter structures may be employed. For example, a straight flow type filter using static electricity may be adopted, wherein a direct voltage is applied between a pair of electrodes existing in the exhaust gas to generate electric discharge so that PM is charged in minus and attracted to the plus side or earth side electrode. Accordingly, the PM collecting device is formed as an electrode on the plus side or the earth side. Also, the shape or structure of the substrate may be a plate, tube, pellet or mesh form other than the above-mentioned honeycomb form.

The present invention may be applicable to all kinds of internal combustion engines having a possibility for generating PM, other than the diesel engine as a compressive ignition type internal combustion engine, including, for example, a direct injection spark ignition type internal combustion engine, more concretely, a direct injection lean burn type gasoline engine. In this engine, fuel directly injected into the combustion chamber is not completely burned in a high load area wherein a large amount of fuel is injected, whereby there is a possibility of generating PM. The same effect and operation is expected as those described before if the present invention is applied to such an engine.

The embodiment of the present invention should not be limited to those described above, but includes all changes, modifications or equivalents within a spirit or scope of the present invention defined by the attached claims. Accordingly, the present invention should not be limitative but applicable to any other techniques included within a spirit of the present invention.

### INDUSTRIAL APPLICABILITY

The present invention is applicable to all internal combustion engines having the possibility of generating particulate matter.

## Claims

1. A device for cleaning exhaust gas of an internal combustion engine, comprising
a device for collecting particulate matter from exhaust gas in an exhaust gas passage,
ozone feeding means capable of feeding ozone to said device for collecting particulate matter from upstream thereof, and
an NOx catalyst disposed upstream from said ozone feeding means, for cleaning NOx in the exhaust gas.

2. The device for cleaning exhaust gas of the internal combustion engine as defined by claim 1, further comprising a separate ozone feeding means capable of feeding ozone to said NOx catalyst from upstream thereof.

3. The device for cleaning exhaust gas of the internal combustion engine as defined by claim 2, further comprising
means for detecting the temperature of exhaust gas flowing into said NOx catalyst or that of a floor of the NOx catalyst, and
means for executing the feeding of ozone from the separate ozone feeding means if the detected temperature of the exhaust gas or that of the floor of said NOx catalyst is lower than a predetermined value.

4. The device for cleaning exhaust gas of the internal combustion engine as defined by claim 2, further comprising
means disposed at a position upstream from said NOx catalyst or between said NOx catalyst and said ozone feeding means, for detecting the concentration of NOx in the exhaust gas, and
means for controlling an amount of ozone fed from said separate ozone feeding means in accordance with the detected concentration of NOx.

5. The device for cleaning exhaust gas of the internal combustion engine as defined by claim 1, further comprising an oxidation catalyst for oxidizing unburned component in the exhaust gas, disposed between said NOx catalyst and said ozone feeding means.

6. The device for cleaning exhaust gas of the internal combustion engine as defined by claim 1, further comprising an oxidation catalyst disposed at a position upstream from said NOx catalyst, for oxidizing unburned component in the exhaust gas.

7. The device for cleaning exhaust gas of the internal combustion engine as defined by claim 1, wherein said NOx catalyst is of a storage reduction type or a selective catalytic reduction type.

8. The device for cleaning exhaust gas of the internal combustion engine as defined by claim 1, further comprising means for generating ozone from gas outside said exhaust gas passage, wherein said ozone feeding means supplies ozone generated in said ozone generating means to said exhaust gas passage.

9. The device for cleaning exhaust gas of the internal combustion engine as defined by claim 2, further comprising means for generating ozone from gas outside said exhaust gas passage, and a flow rate control unit for dividing ozone delivered from said ozone generating means at a predetermined dividing ratio and feeding the same to said ozone feeding means and said separate ozone feeding means.

10. The device for cleaning exhaust gas of the internal combustion engine as defined by claim 1, wherein said internal combustion engine is a compressive ignition type internal combustion engine or a direct injection and spark ignition type internal combustion engine.
